# EUROPEAN PATENT SPECIFICATION

(11) **EP 1 510 924 B1**
(45) Date of publication and mention of the grant of the patent: **23.07.2008**
(21) Application number: 03255329.9
(22) Date of filing: 27.08.2003
(51) Int. Cl.: G06F 12/02, G06F 12/08

(54) **Apparatus and method for handling transactions with writes and reads to EEPROM or Flash memories**
Vorrichtung und Verfahren zur Verwaltung von Transaktionen zum Schreiben und Lesen auf EEPROM-Speicher oder Flash-Speicher
Dispositif et méthode pour gérer des transactions avec écritures et lectures dans des mémoires EEPROM ou Flash

(43) Date of publication of application: 02.03.2005
(73) Proprietor: ARM Limited, Cherry Hinton, Cambridge CB1 9NJ (GB)
(72) Inventor: Vaughan, Gareth Michael, Ely, Cambridgeshire CB6 3DH (GB); Francis, Hedley James, Newmarket, Suffolk CB8 9JY (GB)
(74) Representative: Horner, David Richard

(56) References cited:
- US-A- 5 606 532
- US-B1- 6 373 747
- WU M ET AL: "ENVY: A NON-VOLATILE, MAIN MEMORY STORAGE SYSTEM" ACM SIGPLAN NOTICES, ASSOCIATION FOR COMPUTING MACHINERY, NEW YORK, US, vol. 29, no. 11, 1 November 1994 (1994-11-01), pages 86-97, XP000491727 ISSN: 0362-1340
- CACERES R ET AL: "Operating system implications of solid-state mobile computers" WORKSTATION OPERATING SYSTEMS, 1993. PROCEEDINGS., FOURTH WORKSHOP ON NAPA, CA, USA 14-15 OCT. 1993, LOS ALAMITOS, CA, USA,IEEE COMPUT. SOC, 14 October 1993 (1993-10-14), pages 21-27, XP010096065 ISBN: 0-8186-4000-6

## Description

### FIELD OF THE INVENTION

The present invention relates to a data processing apparatus and method for processing transactions.

### BACKGROUND OF THE INVENTION

A transaction can be considered as a sequence of operations that either must be completed fully or not at all. A data processing apparatus used to process such a transaction may typically include a non-volatile memory (NVM) and a processor operable to process the transaction. Non-Volatile memory is a general term for all forms of solid state (i.e. no moving parts) memory that do retain their memory contents when not powered in some manner. This includes all forms of read-only memory (ROM) such as programmable read-only memory (PROM), erasable programmable read-only memory (EPROM), electrically erasable programmable read-only memory (EEPROM), and flash memory. Often, the transaction will contain a sequence of update operations, with each update operation identifying a target address in the NVM and a corresponding updated data value to be stored at that address. The updated data values may vary in size, and as an example may be a byte (i.e. 8 bits), a half-word (i.e. sixteen bits) or a word (i.e. 32 bits).

One example of such a data processing apparatus which is used to process transactions is a smart card. As will be appreciated by those skilled in the art, smart cards are typically issued to individuals or organisations, and are arranged to perform a variety of data processing operations as dictated by a data processing system with which they are intended to interface. For example, a smart card in the form of a bank credit/debit card may be issued to an individual, and may be arranged when inserted into a bank cash machine to perform a variety of functions as dictated by the bank cash machine. As another example, a smart card may be issued to a user of a cable or satellite television service, for inserting into a decoding unit. The smart card can be interrogated by the decoding unit to provide relevant details about the user, for example the service subscribed to, credit limits, etc. These details may also be updateable under the control of the decoder unit.

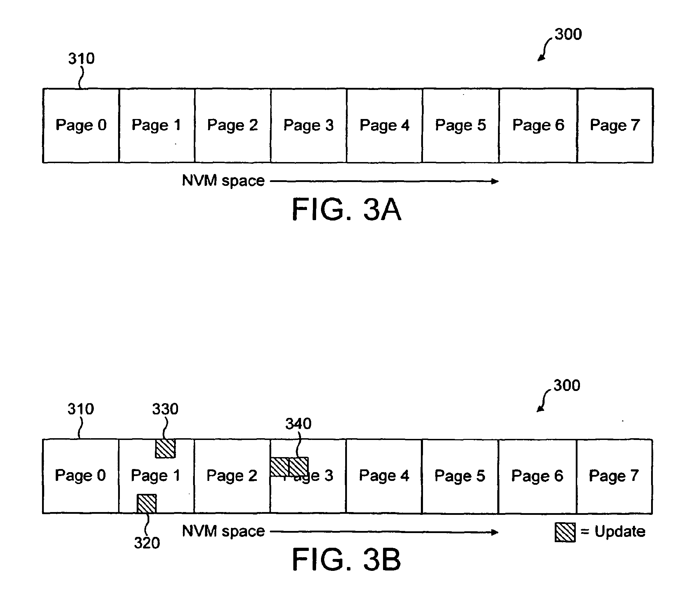

A data processing apparatus such as a smart card will typically store within its NVM a number of data values, which may be updated during the processing of a transaction by the processor. Figure 3A gives a schematic illustration of an NVM 300, which in this example is arranged as a sequence of memory pages 310. Figure 3B schematically illustrates some data values that may be updated during the processing of a particular transaction. Considering the earlier example of a bank related smart card, updated data value 320 may identify an updated balance, updated data value 330 may identify the date of the latest transaction, and updated data value 340 may represent a cryptographic signature created by the bank, and subsequently used in validating the last transaction. In this example, the data values 320 and 330 may be one byte in length each, whilst the cryptographic signature 340 may be two bytes in length. However, these example sizes are for illustration purposes only, and it will be appreciated that the sizes may vary in different implementations.

When a sequence of write operations (also referred to herein as update operations) are specified within a single transaction, it is important that all of these operations are either committed to NVM, or discarded in their entirety, given the earlier mentioned requirement that the transaction must either be completed fully or not at all. One potential way to achieve this is to preserve the original data values in NVM, and to write the updated data values specified by the update operations to some form of transaction buffer. Once all of the sequence of update operations has been performed, then the updated data values can be written back to the NVM to over-write the corresponding original data values. However, there is also a requirement within the transaction that during any read operation the most up-to-date data value must be accessed. Accordingly, the above approach adds an overhead to each read operation, which is unacceptably slow. This is because each read operation must be redirected to the transaction buffer so that if the data value the subject of the read operation has been updated, the updated data value will be retrieved rather than the original data value.

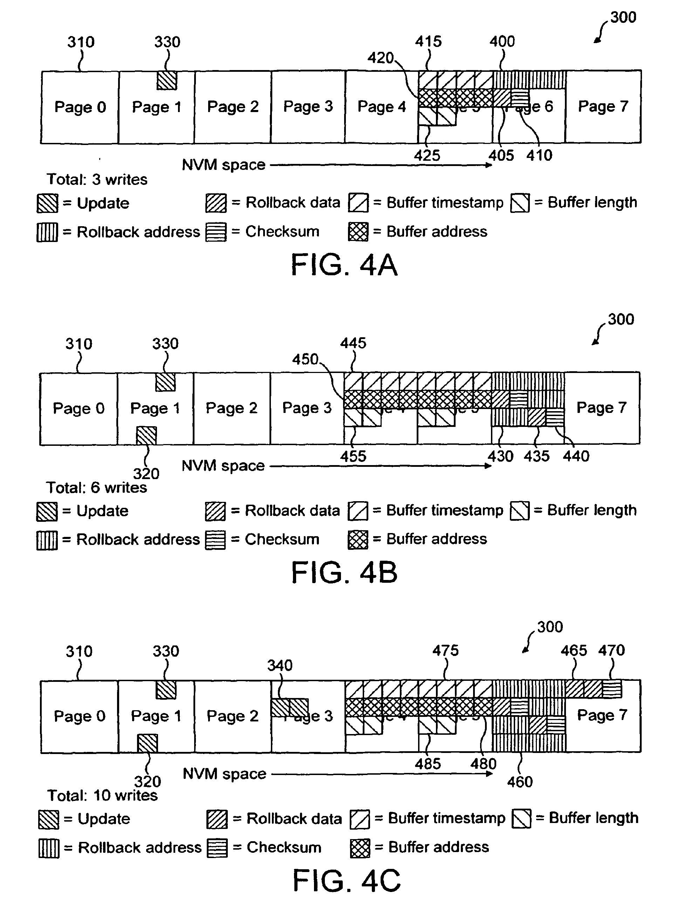

An alternative approach that can be used when processing such a transaction is for the original values to be copied to a transaction buffer in NVM, and for the new values to then be written to the target address in the NVM. Such an approach is illustrated schematically with reference to figures 4A to 4C, which indicates the steps taken to perform the three updates illustrated earlier with reference to figure 3B. In accordance with this technique, the original data value, along with the address for that data value, is first appended to the transaction buffer in NVM, which may for example be formed by the last two memory pages, in this example pages 6 and 7. This transaction buffer resides in NVM so that the application may revert to the original value if the transaction fails. A checksum is also appended to the transaction buffer to certify the integrity of the buffer. Once theses change to the transaction buffer have been made, an update is made to a status page used to store information about the transaction buffer. In the embodiment illustrated in Figures 4A to 4C, two status pages are used so that information is not lost if power is lost when one is being rewritten. Once the update to the status page has taken place, then the updated data value is written to the target address in the NVM.

Hence, considering figure 4A, the original data value in memory page 1 at the location indicated in figure 4A will be copied to page 6 to form the back-up data value 405, and additionally the address for that data value 400 and a checksum 410 will be added. The address, data value and checksum may be written to the transaction buffer together as part of the same NVM write operation. Since this is the first update operation, the transaction buffer formed by pages 6 and 7 will typically be empty, and accordingly the address 400 and back-up data value 405 will be placed at the beginning of the transaction buffer. The checksum 410 is then based on the current contents of the transaction buffer, which at this stage will be solely the address 400 and data value 405.

Thereafter, one of the two status pages (in this example the status page in page 5 of NVM) will be written with certain information about the transaction buffer. In particular, a timestamp value 415 will be added, which is an integer used to show which of the two status pages is most current. The status pages are updated alternately for each change to the transaction buffer, the new timestamp being equal to the highest timestamp already used plus 1. The most recently updated status page, and hence the current status page, has the highest timestamp. In addition, the status page will be written with a buffer address value 420, which is a pointer to the start address of the transaction buffer. Finally a buffer length value 425 will be added to the status page to identify the length of the transaction buffer. Once the status page has been updated, then the updated data value 330 is written to the target address in page 1 of the NVM 300.

Similarly, considering figure 4B, the next original value in page 1 that is to be updated will be copied as back-up data value 435 into the transaction buffer formed by page 6 of the NVM, and additionally the address 430 for that data value and a new checksum value 440 will be added. The new checksum be based on the current contents of the transaction buffer i.e. the address values 400, 430, the data values 405, 435 and the checksum 410. These address, data and checksum values will be placed in the next available location in the transaction buffer. Thereafter the status page not used last time, i.e. the status page in page 4 of the NVM, will be written with a timestamp value 445, and buffer address 450 and buffer length 455 values. Then, the updated data value 320 will be written into the target address of page 1 of the NVM.

Finally, with reference to figure 4C, the original data value in page 3 will be written as back-up data value 465 into the transaction buffer, and the associated address 460 and a new checksum value 470 will be added. The new checksum value will be based on the current contents of the transaction buffer, i.e. the address values 400, 430, 460, the data values 405, 435, 465 and the two previous checksums 410 and 440. In the example illustrated in Figure 4C, it can be seen that this update to the transaction buffer will involve writing to both the first and the second page of the transaction buffer (i.e. pages 6 and 7 of the NVM). Then the status page not used last time, i.e. the status page in page 5 of the NVM, will be written with a timestamp value 475, and buffer address 480 and buffer length 485 values. Thereafter, the updated data value 340 will be written into page 3 of the NVM 300.

A separate write to NVM will typically be required for each NVM page accessed. Hence, in the best case scenario, it will be appreciated that each update operation will take a total of three writes to NVM, one to make the back-up of the original value in the transaction buffer along with the associated address and checksum values, one to make an update to the appropriate status page, and a final write to write the updated data value to the NVM. However, this represents the best-case scenario, and in some circumstances more writes will be needed, for example when the transaction buffer overlaps a page boundary. This is because NVM does not typically support writing at the same time data values that are not adjacent. Indeed, as is evident from figure 4C, in connection with the last update in the transaction, both NVM pages forming the transaction buffer need to be accessed to make the back-up of the original value in the transaction buffer along with the associated address and checksum values. Accordingly, for the sample transaction illustrated in figure 3B, a minimum of ten writes will be required to the NVM.

A single NVM write typically corresponds to several thousands of processor cycles, and accordingly it will be appreciated that one of the biggest performance bottlenecks when processing a transaction containing a sequence of update operations is the time taken to perform the necessary write operations to the NVM. As illustrated schematically with reference to figures 4A-4C, multiple NVM writes are typically required for each update operation in order to ensure that the original data values are available in the event that the transaction does not complete, and accordingly the entire transaction has to be disregarded.

Accordingly, it would be desirable to provide an improved technique for processing a transaction which allows the number of writes to NVM to be reduced, and for the performance to hence be improved.

The Article "eNVy: a Non-Volatile, Main Memory Storage System" by M Wu et al, ACM, Sigplan Notices, New York, US, 01-11-1994, 29(11), pages 86-97, describes the architecture of a large non-volatile main memory storage system built primarily with flash memory, but incorporating in addition an array of battery-backed SRAM used when performing a copy-on-write operation. In particular, when performing such an operation, the original page in flash memory is copied to an unused page in SRAM, with the write request then being executed on the SRAM copy. Pages in the SRAM are flushed back to flash memory when their number exceeds a certain threshold.

The ability to retain pages in SRAM for some time helps to reduce traffic to the flash memory since multiple writes to the same page do not require additional copy-on-write operations.

US-B1-6,373,747 describes a flash EEPROM system in which a write cache is incorporated to reduce the number of writes to the flash EEPROM memory. Data may be operated on several times in the cache before being committed to the flash EEPROM memory, thereby reducing the number of writes to the flash EEPROM memory.

US-A-5,606,532 describes an EEPROM array with flash-like core. The architecture described in D3 is capable of simultaneously programming and erasing any or all of the page sectors within one memory page, with this being achieved by the addition of an onboard low voltage write cache which acts as a buffer between the user and main memory core.

The Article "Operating System Implications of Solid-State Mobile Computers" by R Cáceres et al, Workstation Operating Systems, 1993 Proc 4th Workshop on NAPA, CA, USA, 14-15 October 1993, Los Alamitos IEEE, pages 21-27 describes the practice of dividing a memory space into fast RAM and slow non-volatile memory. The operating system then decides where data belongs and updates the memory map accordingly.

### SUMMARY OF THE INVENTION

Viewed from a first aspect, the present invention provides a data processing apparatus comprising: a non-volatile memory having a plurality of addresses at which data values can be stored within the non-volatile memory; a processor operable to process a transaction containing a sequence of update operations, each update operation identifying a target address in said non-volatile memory and a corresponding updated data value to be stored at that address, the processor being required to either complete the transaction in full or else disregard the entire transaction; a volatile memory having a number of slots operable to temporarily store one or more updated data values; mapping logic having a register associated with each slot, each register being programmable by the processor to identify an address range in the non-volatile memory to be mapped to the associated slot, each register of the mapping logic being further programmable by the processor to identify as control data size data identifying the size of data value to be stored in the associated slot; the processor being operable when performing each update operation to ensure that one of said registers identifies an address range incorporating the target address for that update operation, and to output the target address to the mapping logic; the mapping logic being operable upon receipt of the target address to determine the register identifying an address range that incorporates the target address and dependent thereon to generate a remapped target address, so that the corresponding updated data value is stored in the associated slot of the volatile memory rather than in the non-volatile memory; the processor further being operable to route via the mapping logic a read address for a read operation contained within the transaction so that if the read operation is seeking to read an updated data value that has already been stored in the volatile memory, that read address is remapped to cause the updated data value to be read from the volatile memory; when the sequence of update operations of the transaction have been performed, the processor being operable to cause the updated data values in the volatile memory to be stored in the non-volatile memory at the associated target addresses.

In accordance with the present invention, the data processing apparatus is provided with a volatile memory having a number of slots in which data values can be temporarily stored, and mapping logic that has a register associated with each slot. Each register is programmable by the processor to identify an address range in the non-volatile memory to be mapped to the associated slot. When performing each update operation within a transaction, the processor ensures that one of the registers of the mapping logic identifies an address range that incorporates the target address for that update operation. The target address for the update operation is then output to the mapping logic, which determines which register identifies an address range that incorporates the target address, and based on that information generates a remapped target address that causes the corresponding updated data value to be stored in the associated slot of the volatile memory. The read address for any read operation contained within the transaction is also routed via the mapping logic so that if the read operation is seeking to read an updated data value that has already been stored in the volatile memory, that read address is remapped causing the updated data value to be re-read from the volatile memory. Further, the processor is operable, upon detection of completion of the update operations of the transaction, to cause the updated data values in the volatile memory to be stored in the non-volatile memory at the associated target addresses.

By such an approach, all accesses made to target addresses for update operations during the processing of the transaction actually use the volatile memory, and since accesses to the volatile memory will typically be several orders of magnitude quicker than accesses to the non-volatile memory, this provides a very significant performance benefit. When the sequence of update operations have been performed, it will be necessary for security reasons to ensure that the updated data values are actually written to the non-volatile memory prior to considering the transaction to have being completed in full. However, using the present invention, it will typically be possible to write the updated data values back to the NVM in a consolidated manner, thereby significantly reducing the number of writes to NVM that would otherwise be required. As a result, through the adoption of the technique of the present invention, a significant performance benefit can be realised when processing a transaction containing a sequence of update operations to be performed with respect to data values stored in a non-volatile memory.

It will be appreciated that there may be a number of events that upon detection by the processor will cause the updated data values to be written back to the non-volatile memory during the course of the transaction, so that by the time the transaction completes, all of the updated data values are stored within the non-volatile memory. For example, if the allocated slots in the volatile memory become full, the updated data values in that volatile memory may be written back to the non-volatile memory to allow further updated data values occurring later in the transaction to be stored in the volatile memory. Generally, it will be desirable to keep the number of write operations to the non-volatile memory to a minimum. Hence, in one embodiment, the processor waits until the sequence of update operations has been performed, and then is operable to cause the updated data values in the volatile memory to be stored in the non-volatile memory at the associated target addresses. This is the most efficient approach, since all of the update operations have by that time been performed, and hence all of the updated data values can be written back to the NVM in one consolidated manner, thereby significantly reducing the number of writes required to NVM.

In preferred embodiments, prior to causing the updated data values in the volatile memory to be stored in the non-volatile memory at the associated target addresses, the processor is operable to cause the original data values stored in the non-volatile memory at the associated target addresses to be copied into a transaction buffer so that those original values can be recovered if the subsequent storing of the updated data values from the volatile memory to the non-volatile memory does not complete. This has been found to be an efficient way in which to preserve the original data values so that they are available should the transaction not be completed. In one embodiment of the present invention, all of the affected original data values can be copied to the transaction buffer at one time, thereby increasing the efficiency of the process. This is possible due to the fact that by the time the original values are copied to the transaction buffer, all of the update operations within the transaction have been performed, and accordingly all of the affected data values are known.

In preferred embodiments of the present invention, certain status information and other control data are maintained which are used to indicate the status of individual registers within the mapping logic and/or provide control data used by the mapping logic when performing the remapping function. In particular, in one embodiment, each register of the mapping logic is further programmable by the processor to identify as control data type data identifying one or more types of operation, the mapping logic being operable, if a received address is incorporated by the address range in one of said registers, to only generate a remapped address if the corresponding operation is identified by said type data. Accordingly, by way of example, the type data may indicate that only write or update operations are to have their address remapped if that address falls within the address range specified in the associated register. Alternatively, the type data may specify that only read operations are to have their addresses remapped, or that both read and write operations are to have their addresses remapped. This type data can typically be altered during the processing of the transaction, so that for example during the main body of the transaction, data values can be written to the volatile memory and read from the volatile memory, whilst towards the end of the transaction the type data can be altered so that the data in the volatile memory can then only be read from the volatile memory to allow it to be stored back to the non-volatile memory.

In one embodiment of the present invention, each register of the mapping logic is further programmable by the processor to identify as control data size data identifying the size of data value to be stored in the associated slot. In embodiments where the data value stored within a particular slot may not actually occupy the entirety of the slot, this has been found to be a particularly efficient way of indicating the amount of data within the slot and hence can be used in combination with certain other address information to identify the range of addresses that are mapped to that slot.

In one embodiment of the present invention, each register of the mapping logic includes as control data an enable flag which is set by the processor when an address range is programmed in the register, when the processor wishes to program an address range in one of said registers the processor being operable to select a register from any of the registers whose enable flag is not set. Hence, through the use of an enable flag, a clear distinction can be made between those registers which are in use, and those registers which are still available for programming during the course of the transaction. It will be appreciated that when the processor is seeking to select a register whose enable flag is not set, it may be arranged to actually query the mapping logic to obtain that information, or alternatively may be arranged to internally keep its own copy of the enable flag values so that it can directly determine an available register without needing to access the mapping logic.

It will be appreciated that the register may be a single register used to store both the address range information and any control data. However, in one embodiment, each register of the mapping logic actually comprises an address register for storing data from which the address range is derivable and a control register for storing the control data.

The slots within the volatile memory may take a variety of forms. In one embodiment, the slots in the volatile memory comprise type slots, with each type slot being operable to store one data value. In preferred embodiments, the register associated with each type slot includes as control data size data identifying the size of data value to be stored in the associated type slot. In such embodiments, the address range to be mapped to one of the type slots is identified in the associated register by an address value and the size data. In such embodiments, the address value will typically be the target address for the associated update operation.

In one embodiment, the slots in the volatile memory may comprise a number of page slots, each page slot being operable to store a plurality of data values mapped to a range of the non-volatile memory. It will be appreciated that such page slots can be useful in a variety of situations. In one example the page slots can be used in combination with the type slots. There will typically be a predetermined number of type slots provided within the volatile memory, and in some implementations, this predetermined number of type slots may be sufficient to ensure that for any particular transaction there are always sufficient type slots available to allow the target address of each update operation of that transaction to be remapped. However, in other implementations, to allow for situations where there may be an insufficient number of type slots for a particular transaction, the page slots can additionally be used.

In preferred embodiments of the present invention, the range of the non-volatile memory is one or more pages of the non-volatile memory. Typically, the size of pages in the non-volatile memory is predetermined, and accordingly in one embodiment the address range to be mapped to one of the page slots is determined with reference to a start address for the range of the non-volatile memory as stored in the associated register and the number of pages of the non-volatile memory within the range.

In one embodiment, when the processor wishes to program an address range in one of said registers the processor is operable to select, if available, a register associated with a type slot whose enable flag is not set, and if all registers associated with a type slot have their enable flag set to select, if available, a register associated with a page slot whose enable flag is not set. In preferred embodiments, when a register associated with a page slot is enabled, a copy of an NVM memory page is made within the page slot by the processor, and due to the remapping applied by the mapping logic, this will mean that the copy of the page contained within the page slot will also include any updated data values that may be stored within type slots associated with addresses within that NVM memory page. Accordingly, in preferred embodiments, once the copy of the memory page has been made in the page slot, any type slots that are associated with addresses within that NVM page will typically be disabled to allow them to be used for future update operations.

In one embodiment, if all registers have their enable flag set, the processor is operable to cause the original data values at the target addresses of the updated data values in the associated slots to be copied into a buffer in non-volatile memory, after which the updated data values in the associated slots are written to their target addresses in the non-volatile memory and then the enable flag for each associated register is reset. Thereafter, the registers and their associated slots will be available for use for subsequent update operations contained within the transaction. In one embodiment of the present invention, the copying of the affected original data values to the buffer can take place using a single write operation for each NVM page of the buffer written to.

Viewed from a second aspect, the present invention provides a method of processing within a data processing apparatus a transaction containing a sequence of update operations, the data processing apparatus comprising a non-volatile memory having a plurality of addresses at which data values can be stored within the non-volatile memory, and a processor operable to process the transaction, each update operation identifying a target address in said non-volatile memory and a corresponding updated data value to be stored at that address, the processor being required to either complete the transaction in full or else disregard the entire transaction, the data processing apparatus further comprising a volatile memory having a number of slots operable to temporarily store one or more updated data values, and mapping logic having a register associated with each slot which is programmable to identify an address range in the non-volatile memory to be mapped to the associated slot, each register of the mapping logic being further programmable by the processor to identify as control data size data identifying the size of data value to be stored in the associated slot, the method comprising the steps of: when performing each update operation: (a) determining whether one of said registers identifies an address range incorporating the target address for that update operation, and if not programming one of said registers to include such an address range; (b) outputting the target address to the mapping logic; (c) upon receipt of the target address by the mapping logic, determining the register identifying an address range that incorporates the target address and dependent thereon generating a remapped target address; (d) storing the corresponding updated data value in the associated slot of the volatile memory identified by the remapped target address; when performing a read operation contained within the transaction: (i) routing via the mapping logic a read address for the read operation; (ii) determining if the read operation is seeking to read an updated data value that has already been stored in the volatile memory, and if so remapping that read address; and (iii) completing the read operation whereby if the read address is remapped at said step (ii) the updated data value is read from the volatile memory; when the sequence of update operations of the transaction have been performed, causing the updated data values in the volatile memory to be stored in the non-volatile memory at the associated target addresses.

Viewed from a third aspect, the present invention provides a computer program comprising code means operable to cause a data processing apparatus to perform the method in accordance with the second aspect of the present invention when that computer program is run on the data processing apparatus.

### BRIEF DESCRIPTION OF THE DRAWINGS

The present invention will be described further, by way of example only, with reference to a preferred embodiment thereof as illustrated in the accompanying drawings,
in which:
Figure 1 is a block diagram illustrating components of a smart card in accordance with one embodiment of the present invention;
Figure 2 is a block diagram illustrating in more detail the transmapper of figure 1;
Figures 3A and 3B schematically illustrate a non-volatile memory space, and an example sequence of updates that may occur during processing of a transaction;
Figures 4A to 4C illustrate one known technique for performing the sequence of updates illustrated in figure 3B;
Figures 5A to 5C illustrate schematically how the sequence of updates shown in figure 3B is performed in accordance with one embodiment of the present invention;
Figure 6A schematically illustrates the format of a control register used in one embodiment of the present invention;
Figures 6B to 6D illustrate schematically how the operations allowed with respect to the Random Access Memory slots are controlled through appropriate setting of the read enable and write enable fields of the control register in accordance with one embodiment of the present invention; and
Figures 7A and 7B are flow diagrams illustrating the processing of a transaction in accordance with an embodiment of the present invention.

### DESCRIPTION OF PREFERRED EMBODIMENT

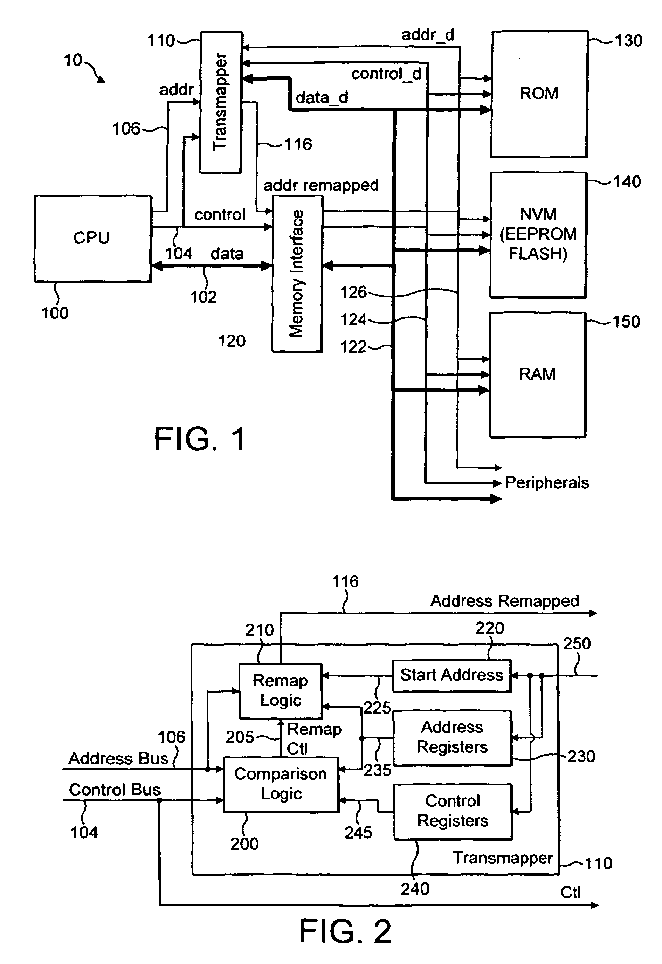

Figure 1 is a block diagram of a smart card 10 in accordance with an embodiment of the present invention. The smart card 10 has a processor 100 provided therein for performing data processing operations. A Read Only Memory (ROM) is provided for storing, amongst other things, the operating system to be run on the processor 100, and in addition a non-volatile memory (NVM) 140 is provided for storing data values used or generated by the processor 100 when performing data processing operations. In the example illustrated in figure 1, the NVM 140 takes the form of either an EEPROM, or a flash memory. Also provided in the smart card 10 is a volatile memory 150, which in the example of figure 1 takes the form of a Random Access Memory (RAM).

When the processor 100, also referred to herein as a central processing unit (CPU), wishes to access data in any of the memory devices 130, 140, 150, the processor is arranged to issue the appropriate control and address signals on buses 106, 104, respectively, and in the invent of a write access is also arranged to output the necessary data to be written to the destination memory device on bus 102. As can be seen from figure 1, the address signal on bus 106 is routed to a transmapper logic 110, which is arranged in certain situations to perform a remapping function with regards to certain addresses in order to control access to data values stored in the NVM 140, as will be discussed in more detail later. The address is then forwarded via path 116 from the transmapper logic 110, remapped as appropriate, to the memory interface 120, which also receives the control data over bus 104, and any write data over path 102. The memory interface 120 then interfaces the processor 100 with the memory bus, which consist of a data bus 122, a control bus 124 and an address bus 126. In the known manner, the address output onto the address bus 126 will identify a location in one of the memory devices 130, 140, 150, the control data on the control bus 124 will identify the type of access being performed, for example whether the access is a read access or a write access, and the data bus will carry any data to be written to the memory devices in the event of a write access, or alternatively will carry any data read from the memory devices in the event of a read access.

As can be seen from figure 1, the memory bus is also coupled to the transmapper 110 in order to allow the processor 100 to program values within certain registers of the transmapper 110, as will be discussed in more detail later. In addition, the memory bus can also be coupled to certain other peripheral devices, as will be appreciated by those skilled in the art.

One of the functions of the processor 100 is to process transactions that comprise a sequence of operations that must either be completed fully or not at all. Typically, such transactions will include a number of update operations that are used to update the value of certain data values stored within the NVM 140. The NVM 140 is used as a secure storage for these data values within the smart card 10, with these data values then being updated by the processor, or read by the processor, during performance of the transaction as required. Whilst the NVM 140 provides a secure storage for the data values used or generated when performing transactions, writing data values to the NVM 140 takes a very significant amount of time, and for example each NVM write typically corresponds to several thousands of processor cycles. This is due to the time taken to set up the write operation within the NVM 140 and then execute the update within the NVM. With this in mind, it is desirable to reduce the number of write accesses to the NVM 140 that are required during the processing of a transaction.

This is achieved in embodiments of the present invention by allocating within the RAM 150 a number of slots which can be used to temporarily store one or more updated data values ultimately destined for the NVM 140. The transmapper 110 then includes registers associated with each such slot, which are programmable by the processor 100 to identify an address range in the NVM 140 to be mapped to the associated slot in RAM 150. These registers have their own unique addresses, and accordingly can be accessed by the processor 100 via the memory interface 120 and the memory bus 122, 124, 126 in order to allow the required address range and certain control information to be written into those registers.

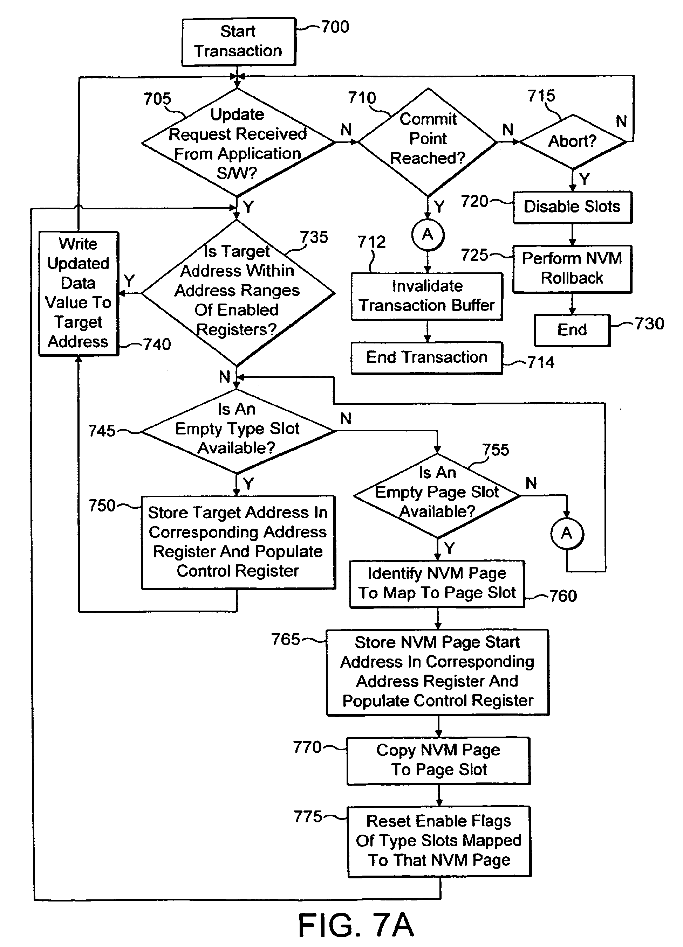

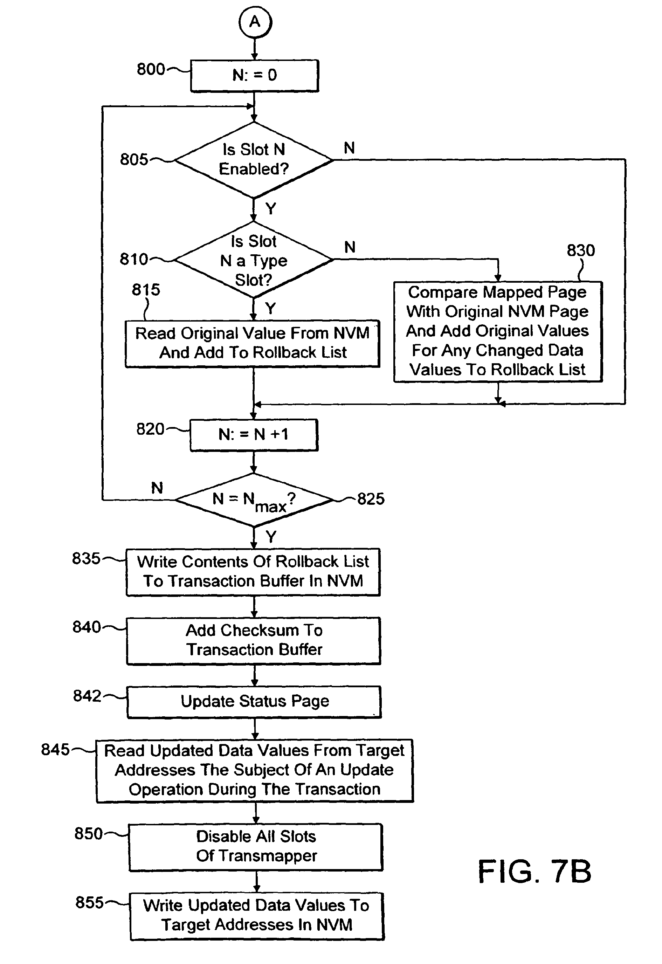

As will be discussed in more detail later with reference to figures 7A and 7B, the processor is arranged when performing each update operation within a transaction to ensure that one of the registers within the transmapper 110 identifies an address range incorporating the target address for that update operation, this being achieved by appropriate programming of an available register. When the processor then outputs the target address, this will be received by the transmapper, which will identify the register that has an address range incorporating that target address, and based thereon will generate a remapped target address. The control data on path 104 is also input to the transmapper, since this identifies the type of access being performed by the CPU, and as will be discussed later, certain control information can be stored within each slot's associated register to identify which types of access should have their target addresses remapped.

Assuming the transmapper 110 determines from the control information 104 that the address should be remapped, it will then generate a remapped address which will point to the relevant slot within the RAM 150. As a result, this will cause the access issued by the processor 100 to be directed to the RAM slot rather than to the NVM target address. Accordingly, an updated data value the subject of a write access will be stored into the identified RAM slot. Similarly, in the event of a read access, if the read operation is seeking to read an updated data value that has already been stored in a RAM slot, that read address will be remapped to cause the updated data value to be read from the RAM slot. This is important, since it is typically a requirement of a transaction that any read access within the transaction will read the most up-to-date version of the data value.

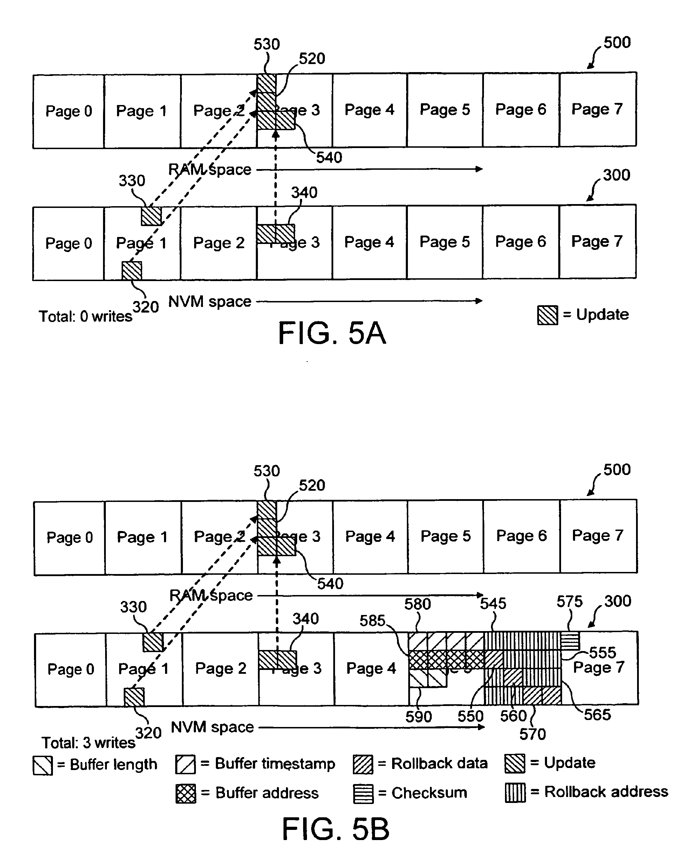

Once all of the update operations within a transaction have been performed, the updated data values will be written to the non-volatile memory, these updated data values being accessed from the RAM 150. Since all of the update operations have by that time been performed, all of the updated data values can be written back to the NVM in one consolidated manner, thereby significantly reducing the number of writes to NVM that would otherwise be required, and thus enabling a significant performance benefit to be realised when processing such transactions. This process will be discussed in more detail later with reference to figures 5A to 5C, and figures 7A and 7B.

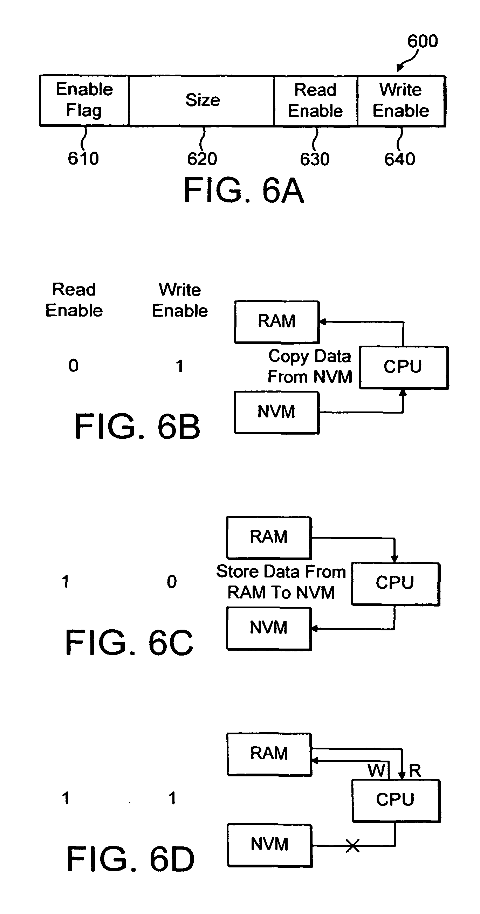

Figure 2 is a block diagram illustrating in more detail the logic provided within the transmapper logic 110. Typically, the allocated slots within the RAM 150 will occupy a contiguous section of the RAM, with that section being identified by a start address programmed into the start address register 220. The transmapper 110 also includes a number of address registers 230, and a corresponding number of control registers 240. Typically, a single address register and a single control register will be associated with each slot allocated in RAM 150. A predetermined number of the slots allocated in RAM will be type slots, each type slot being operable to store one data value. For type slots, the associated address register 230 will be arranged to store the target address in NVM that is to be mapped to that type slot In one embodiment of the present invention, the control register associated with that type slot will take the form illustrated in figure 6A. As shown in figure 6A, the control register will include an enable flag field, which may be a single bit field, which is set by the processor when the processor decides to store an updated data value in the associated slot. The size field 620 is then used to identify the size of the data value to be stored in the associated type slot. In one embodiment, the size of the data value may be either a byte, a half-word or a word, and accordingly the size field 620 can be embodied as a 2-bit field.

The control register 600 also preferably includes a read enable field 630 which is set to indicate whether data values can be read from the associated slot, and a write enable field set to indicate whether data values can be written to the associated slot. In one embodiment, both the read enable field and the write enable field can be embodied as single bit fields.

In addition to type slots, and as will be discussed in more detail later, one or more of the slots may also be specified as page slots, each page slot being operable to store a plurality of data values mapped to a page of the NVM. In such instances, the associated address register 230 will store the address for the start for the relevant NVM page and the associated control register will have an enable flag field, and read and write enable fields, but will not use any size field information.

The read and write enable fields 630, 640 can have their values changed during the processing of a transaction in order to enable certain types of activities to be performed by the processor. Figures 6B, 6C and 6D illustrate how different read and write enable values can be used in one embodiment of the present invention. If the read enable field is not set and the write enable field is set, then as shown in figure 6B this allows data to be read from the NVM and stored within the appropriate RAM slot. As can be seen from figure 1, this is possible since when the processor initiates a read access to NVM, then the transmapper 110 will identify from the control data on path 104 that a read access is being performed, and accordingly will perform no address remapping. As a result, the read access will actually be propagated onto the NVM 140 in order to allow the data to be read. However, when that data is then to be written to the appropriate RAM slot 150, the transmapper 110 will detect from the control data on path 104 that a write access is taking place, and since the write enable field is set will cause the address to be remapped when it detects that the address is within the address range allocated to the associated address register. Accordingly, the data value will be written into the RAM slot rather than written to the NVM memory 140.

As shown in figure 6C, if the read enable flag is set and the write enable flag is not set, then this will enable any updated data value stored within the associated RAM slot to be retrieved for storage back to the NVM 140. This is due to the fact that during the read access, the transmapper 110 will perform address remapping, thus causing the data value to be retrieved from the associated RAM slot, whilst when writing to the same address, the transmapper 110 will not perform any remapping, and accordingly the data value will be written into the target address of the NVM 140.

With reference to figure 6D, if both the read enable and the write enable fields are set, then both read and write accesses will be remapped to the associated RAM slot, and the NVM 140 will not be accessed. In embodiments of the present invention it is not envisaged that an enabled control register will have both the read enable and write enable fields not set, since this would not allow any read or write accesses to take place to the associated slot.

Returning to figure 2, it can be seen that the processor 100 can store the relevant address and control values within the address registers 230 and control registers 240, respectively, by accessing those registers via the memory bus 250, which as shown in figure 1 consist of a data bus 122, a control bus 124, and an address bus 126.

Each time an address is issued by the processor on address bus 106, that address, along with the associated control information on control bus 104 will be routed to comparison logic 200 within the transmapper 110. The comparison logic 200 will also receive the contents of the various address registers 230 and control registers 240 via paths 235 and 245, respectively. If the comparison logic 200 detects that the address on path 106 falls within the address range associated with any enabled address/control register combination, and that the control data on path 104 matches the read enable and/or write enable information stored within that same control register, then it will issue a set remap control signal over path 205 to the remap logic 210. When determining the address range for a type slot, the comparison logic 200 will consider the target address stored in the associated register as masked by the size information in the size field 620 of the associated control register. When determining the address range for a page slot, the comparison logic 200 will consider the page start address as stored in the associated address register 230, in combination with the known predetermined NVM memory page size information.

The remap logic 200 is arranged to receive the start address from start address register 220 over path 225, and is also arranged to receive the contents of the address registers 230 over path 235. In addition, the remap logic 210 also receives the address on the address bus 106. If the remap control signal on path 205 is not set, then the remap logic 210 will perform no remapping and the address received on path 106 will be output on path 116. However, in the event that the remap control signal on path 205 is set, indicating that the address should be remapped, then the remap logic will be arranged to generate a remapped address for output over path 116 to the memory interface 120. For a type slot, this remapped address will be determined by adding to the start address received over path 225 an offset value which will be dependent on which of the address registers contains an address range incorporating the target address (as detected by the comparison logic 200). In preferred embodiments, an indication of this address register will be included in the remap control signal passed over path 205 from the comparison logic 200 to the remap logic 210. Further, the address in that address register 230 will be used to identify within the remapped address the byte in the RAM to write to. For remapping to a page slot, the remapped address will be determined by again adding an appropriate offset to the start address, and in addition combining that value with a value derived from the address received over path 106 in order to identify a particular location within the page slot.

Figures 5A to 5C schematically illustrate how the sample sequence of updates illustrated in figure 3B is performed in accordance with an embodiment of the present invention. As can be seen in figure 5A, in addition to the NVM 300, there will also be available a number of slots within RAM 500. In the example illustrated in figure 5A, these slots are shown as starting at the top of page 3 of the RAM 500. However, it will be appreciated that these slots can be allocated at any appropriate location within the RAM 500 as indicated by the start address stored within the start address register 220 of the transmapper 110.

As shown in figure 5A, as each update operation is encountered within the transaction, the processor is arranged to associate that updated data value with a type slot via appropriate programming of corresponding registers within the transmapper 110, such that as each updated data value is output by the processor 100, that data value is actually written into the associated type slot rather than into the NVM memory, this being indicated by the dotted lines in figure 5A. Accordingly, the three updated data values 330, 320, and 340 are actually written as updated values 530, 520 and 540, respectively, within three type slots of the RAM 500. At this stage, no update has been performed within the NVM 300, and accordingly the NVM retains the original data values. Hence, by the time these updates have been written to the appropriate RAM slots, no NVM writes have taken place. Since writes to RAM will typically be several orders of magnitude quicker than writes to NVM, then the process illustrated in figure 5A can be considered to take negligible time, when compared with even a single NVM write.

Once all of the update operations have been processed, then as shown in figure 5B it is now necessary to make a backup copy of the original data values stored at the relevant NVM target addresses, so that those data values will be available within the NVM if the transaction does not complete. Accordingly, the original data values to be replaced by updated data values 330, 320 and 340 are stored within a transaction buffer within the NVM as backup values 550, 560, 570, respectively, along with their corresponding addresses 545, 555, 565. In addition, a single checksum value 575 is appended to the transaction buffer in order to validate the contents of the transaction buffer. These address, data and checksum values can be written to the transaction buffer in pages 6 and 7 via two NVM writes (one per NVM page).

Thereafter, during a subsequent NVM write process, a status page (in this example in page 5 of the NVM) is updated with a timestamp value 580, and buffer address 585 and buffer length 590 values, in an analogous way to that described earlier with reference to figures 4A to 4C. However, only a single status page update is required, as all of the affected original data values have been copied to the transaction buffer in one consolidated manner.

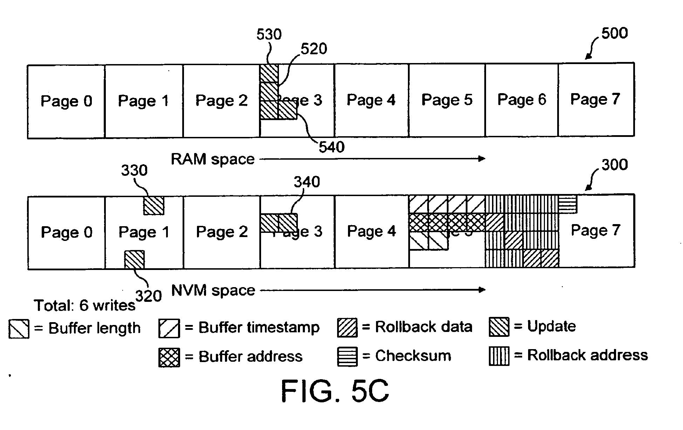

At this stage, the NVM memory is then ready to receive each of the updated data values, which are read from the relevant RAM slot, and then stored to the associated target address in NVM as shown in figure 5C. For the example set of transactions illustrated, this will take a further three NVM writes. Accordingly, by comparison of the approach of figures 5A to 5C with the earlier identified prior art approach illustrated in figures 4A to 4C, it can be seen that the same sequence of update operations can be performed in accordance with embodiments of the present invention with six NVM writes, as opposed to the ten NVM writes that are required in the prior art. This provides a very significant improvement in performance when processing transactions involving a number of updates of data values in the NVM 140.

Figure 7A and 7B illustrate in more detail the processing of a transaction within the smart card illustrated in figure 1. At step 700, the transaction is started, after which at step 705 it is determined whether an update request is received from the application software running on the processor 100. If not, it is determined at step 710, whether a commit point has been reached within the transaction, and if so, the process branches to the process illustrated in figure 7B in order to allow the transaction to be completed. Thereafter, the transaction buffer's contents are invalidated at step 712 and the transaction then ends at step 714. However, if a commit point has not been reached then the process proceeds to step 715, where it is determined whether the transaction has been aborted as a result of a synchronous abort requested by the software. If it has, then all of the RAM slots are disabled at step 720, and an NVM rollback process is performed at step 725 in order to restore within the NVM the original data values that existed prior to the start of the transaction. This is done in accordance with known rollback procedures of prior art systems and hence will not be discussed further herein. Thereafter, the process ends at step 730. However, if an abort is not detected at step 715, then the process returns to step 705.

When at step 705 it is determined that an update request has been received, the process proceeds to step 735, where it is determined whether the target address for that update request is within the address ranges of any enabled registers within the transmapper 110. It will be appreciated that this could be determined by sending the appropriate query to the transmapper 110. However, in preferred embodiments of the present invention, the processor 100 keeps its own internal record of the address ranges that have been set within registers of the transmapper, and accordingly is able to make the determination required at step 735 without accessing the transmapper 110. If the target address is determined to be within the address range of one of the enabled registers, then the process proceeds directly to step 740, where the updated data value is written to the target address. As discussed earlier with reference to figures 1 and 2, this will cause a remapping to take place within the transmapper 110, such that the updated data value will be written to one of the slots within the RAM 150.

If it is determined at step 735 that the target address is not within the address ranges of an enabled register, then the process proceeds to step 745, where it is determined whether there is an empty type slot available. In preferred embodiments, this is determined by identifying whether there are any control registers 240 within the transmapper 110 that have not yet been enabled. Again, in preferred embodiments, the processor 100 keeps its own internal record of which registers have been enabled, and accordingly can make this determination without needing to access the transmapper 110. Assuming that an empty type slot is available then at step 750 the target address is stored in the corresponding address register, and the corresponding control register is populated with the required control data. Thereafter, the process proceeds to step 740, where the updated data value is written to the target address. This then results in the appropriate remapping being performed by the transmapper such that the updated data value is actually written to the associated RAM slot.

If at step 745 it is determined that an empty type slot is not available, then the process proceeds to step 755, where it is determined whether an empty page slot is available. If an empty page slot is available, then the process proceeds to step 760, where the processor identifies a suitable NVM page to map to that page slot. It will be appreciated that there are a number of ways in which a suitable NVM page could be determined. However, in one embodiment, the NVM page is chosen to be that page which has the most type slots mapping addresses in that page. For example, in an example implementation where there are eight type slots and two page slots, it may be the case that, say, five of the type slots are being used to store updated data values for target addresses within one particular NVM page, and in that instance that particular NVM page would be selected as the appropriate NVM page to map to the page slot at step 760.

Once a suitable NVM page has been identified, the process proceeds to step 765, where the NVM page start address is stored in the corresponding address register 230, and the corresponding control register is populated with the required control data.

Thereafter, at step 770, the NVM page is copied to the page slot. Unlike writing to NVM, reading from NVM is relatively quick, and accordingly this process occurs relatively quickly. Furthermore, because all addresses are passed via the transmapper 110, any updated data values within that NVM page address range that have already been stored in a type slot will get copied into the page slot instead of any original values in the NVM, and accordingly once the NVM page has been copied to the page slot, it will include any updated data values relating to target addresses within that NVM page. Accordingly, at step 775, the enable flags are reset for any type slots that are mapped to that NVM page, since the updated data values stored in such type slots will now have been replicated within the page slot.

Thereafter, the process returns to step 735, where it is determined whether the target address is now within the address ranges of any enabled registers. If the target address happens to be within the NVM page that was copied to the page slot at step 770, this will clearly be the case, and the process will branch to step 740 to cause that updated data value to be written to the target address. This will in fact cause the updated data value to be written to the appropriate location within the page slot. However, if the target address is not within the NVM page that has been copied to the page slot 770, then the process will instead branch to step 745, but at this stage there will now be an empty type slot available and accordingly the process can proceed through steps 750 and 740.

Returning to step 755, if it is determined that an empty page slot is not available, then the process branches to the process illustrated in figure 7B. As will be discussed later with reference to figure 7B, during this process the processor is operable to cause the original data values at the target addresses of the updated data values in the associated slots to be copied into a buffer in non-volatile memory, after which the updated data values in the associated slots are written to their target addresses in the non-volatile memory, and the enable flag for each associated register is reset. The process is hence the same as that performed when the commit point of the transaction has been reached, but rather than the transaction buffer then being invalidated and the transaction then ending, the process returns to step 745 so that the current update request of the transaction can now be processed.

At some point during processing of the transaction, assuming it has not been aborted by then, the commit point will be reached at step 710, and the process will branch to that shown in figure 7B.

As shown in figure 7B, at step 800 a variable N is set to zero after which at step 805 it is determined whether slot N is enabled. If so, it is then determined at step 810 whether slot N is a type slot. If it is, then the corresponding original value which the updated data value in that type slot is to replace is read from NVM and added to a rollback list. This rollback list may be maintained within RAM, or may alternatively be maintained within some internal registers of the processor 100. Then the process proceeds to step 820, where N is incremented by one, whereafter it is determined whether N is equal to N_{MAX} (i.e. the total number of slots). If N does not equal N_{MAX}, then the process returns to step 805, whereas otherwise the process proceeds to step 835.

If at step 810, it is determined that the slot N is not a type slot, then the process proceeds to step 830. At this point, it is assumed that the slot is a page slot, and accordingly the mapped page contained within the page slot is compared with the original NVM page and for any data values that are determined to have changed, the original values are added to the rollback list. The process then proceeds to step 820.

If at step 805 it is determined that slot N is not enabled, then the process proceeds directly to step 820.

When it is determined at step 825 that N does in fact equal N_{MAX} (i.e. all slots have been considered), then the process proceeds to step 835 where the contents of the rollback list are written to the transaction buffer in NVM. Thereafter, a checksum is added to the transaction buffer at step 840. As discussed earlier with reference to figure 5B, steps 835 and 840 will typically be performed as part of the same NVM write operation. However, one NVM write operation will be required per transaction buffer NVM page written to, and hence if more than one NVM page is written to in order to write the necessary data into the transaction buffer, more than one NVM write operation will be required.

Thereafter, the status page is updated at step 842 with timestamp, buffer address and buffer length values. As discussed earlier with reference to figures 5B, this will typically involve a single NVM write operation. Thereafter, the process proceeds to step 845, where for any target addresses which were the subject of an update operation during a transaction, the corresponding updated data values are read. Since at this stage the relevant control registers within the transmapper will still be enabled, this will cause the transmapper 110 to perform any required remapping to ensure that the data values retrieved are those stored within the relevant RAM slots. Thereafter, at step 850, all slots within the transmapper are disabled, after which the updated data values are written to the various target addresses in NVM 855. Since at this stage, the slots of the transmapper have been disabled, the transmapper 110 will not perform any remapping, and accordingly the updated data values will then be written directly into the NVM at the indicated target addresses. With reference to figure 5C, it will be appreciated that at step 855, there will typically be an NVM write incurred for each updated data value. Once step 855 has been completed, the transaction ends at step 860.

From the above description, it will be appreciated that the embodiment of the present invention described above enables a significant performance benefit to be realised when processing transactions involving a number of updates of data values within the NVM. In particular, the software executing on the processor will cause appropriate address ranges to be associated with RAM slots, such that all update operations directed to the NVM address space actually take place with respect to the RAM, yielding a very significant increase in performance. When all of the update operations have been completed, the software executing on the processor initiates a write-back process that causes the updated data values to be programmed into the relevant NVM target addresses in one consolidated manner. If the transaction is aborted at any stage due to a software request (i.e. a synchronous abort), the updated data values within the RAM slots can be marked as invalid, leaving the NVM unchanged.

If the transaction is aborted at any stage due to an asynchronous event, such as a power loss or a hardware failure, the transaction can be "rolled-back" using the data in the transaction buffer in NVM. This will be done using the same techniques as employed in prior art systems, and is not affected by the use of the speed-saving techniques of embodiments of the present invention. Hence although, by way of example, a power loss would result in the loss of the data in the RAM slots and registers of the transmapper, the NVM contents are always consistent so that the aborted transaction can be rolled back when the power is next applied.

The invention is defined as set forth in the claims.

## Claims

1. A data processing apparatus comprising:
a non-volatile memory (140) having a plurality of addresses at which data values can be stored within the non-volatile memory;
a processor (100) operable to process a transaction containing a sequence of update operations, each update operation identifying a target address in said non-volatile memory and a corresponding updated data value to be stored at that address, the processor being required to either complete the transaction in full or else disregard the entire transaction;
a volatile memory (150) having a number of slots operable to temporarily store one or more updated data values;
mapping logic (110) having a register (230, 240) associated with each slot, each register being programmable by the processor to identify an address range in the non-volatile memory to be mapped to the associated slot, each register of the mapping logic being further programmable by the processor to identify as control data size data (620) identifying the size of data value to be stored in the associated slot;
the processor being operable when performing each update operation to ensure that one of said registers identifies an address range incorporating the target address for that update operation, and to output the target address to the mapping logic;
the mapping logic being operable upon receipt of the target address to determine the register identifying an address range that incorporates the target address and dependent thereon to generate a remapped target address, so that the corresponding updated data value is stored in the associated slot of the volatile memory rather than in the non-volatile memory;
the processor further being operable to route via the mapping logic a read address for a read operation contained within the transaction so that if the read operation is seeking to read an updated data value that has already been stored in the volatile memory, that read address is remapped to cause the updated data value to be read from the volatile memory;
when the sequence of update operations of the transaction have been performed, the processor being operable to cause the updated data values in the volatile memory to be stored in the non-volatile memory at the associated target addresses.

2. A data processing apparatus as claimed in Claim 1, wherein prior to causing the updated data values in the volatile memory to be stored in the non-volatile memory at the associated target addresses, the processor is operable to cause the original data values stored in the non-volatile memory at the associated target addresses to be copied into a transaction buffer so that those original values can be recovered if the subsequent storing of the updated data values from the volatile memory to the non-volatile memory does not complete.

3. A data processing apparatus as claimed in any preceding claim, wherein each register of the mapping logic is further programmable by the processor to identify as control data type data (630, 640) identifying one or more types of operation, the mapping logic being operable, if a received address is incorporated by the address range in one of said registers, to only generate a remapped address if the corresponding operation is identified by said type data.

4. A data processing apparatus as claimed in any preceding claim, wherein each register of the mapping logic includes as control data an enable flag (610) which is set by the processor when an address range is programmed in the register, when the processor wishes to program an address range in one of said registers the processor being operable to select a register from any of the registers whose enable flag is not set.

5. A data processing apparatus as claimed in any preceding claim, wherein each register of the mapping logic comprises an address register (230) for storing data from which the address range is derivable and a control register for storing the control data.

6. A data processing apparatus as claimed in any preceding claim, wherein the slots in said volatile memory comprise type slots, each type slot being operable to store one data value.

7. A data processing apparatus as claimed in Claim 6, wherein the address range to be mapped to one of said type slots is identified in the associated register of the mapping logic by an address value and the size data.

8. A data processing apparatus as claimed in any preceding claim, wherein the slots in said volatile memory comprise one or more page slots, each page slot being operable to store a plurality of data values mapped to a range of the non-volatile memory.

9. A data processing apparatus as claimed in Claim 8, wherein the range of the non-volatile memory is one or more pages of the non-volatile memory.

10. A data processing apparatus as claimed in Claim 9, wherein the size of pages in the non-volatile memory is predetermined, and the address range to be mapped to one of said page slots is determined with reference to a start address (220) for the range of the non-volatile memory as stored in the associated register and the number of pages of the non-volatile memory within the range.

11. A data processing apparatus as claimed in any of claims 8 to 10, wherein each register of the mapping logic includes as control data an enable flag (610) which is set by the processor when an address range is programmed in the register, and wherein the slots in said volatile memory further comprise type slots, each type slot being operable to store one data value, wherein when the processor wishes to program an address range in one of said registers the processor is operable to select, if available, a register associated with a type slot whose enable flag is not set, and if all registers associated with a type slot have their enable flag set to select, if available, a register associated with a page slot whose enable flag is not set.

12. A data processing apparatus as claimed in Claim 11, wherein if all registers have their enable flag set, the processor is operable to cause the original data values at the target addresses of the updated data values in the associated slots to be copied into a buffer in non-volatile memory, after which the updated data values in the associated slots are written to their target addresses in the non-volatile memory and then the enable flag for each associated register is reset.

13. A method of processing within a data processing apparatus a transaction containing a sequence of update operations, the data processing apparatus comprising a non-volatile memory (140) having a plurality of addresses at which data values can be stored within the non-volatile memory, and a processor (100) operable to process the transaction, each update operation identifying a target address in said non-volatile memory and a corresponding updated data value to be stored at that address, the processor being required to either complete the transaction in full or else disregard the entire transaction, the data processing apparatus further comprising a volatile memory (150) having a number of slots operable to temporarily store one or more updated data values, and mapping logic (110) having a register (230, 240) associated with each slot which is programmable to identify an address range in the non-volatile memory to be mapped to the associated slot, each register of the mapping logic being further programmable by the processor to identify as control data size data (620) identifying the size of data value to be stored in the associated slot, the method comprising the steps of:
when performing each update operation:
(a) determining whether one of said registers identifies an address range incorporating the target address for that update operation, and if not programming one of said registers to include such an address range;
(b) outputting the target address to the mapping logic;
(c) upon receipt of the target address by the mapping logic, determining the register identifying an address range that incorporates the target address and dependent thereon generating a remapped target address;
(d) storing the corresponding updated data value in the associated slot of the volatile memory identified by the remapped target address;
when performing a read operation contained within the transaction:
(i) routing via the mapping logic a read address for the read operation;
(ii) determining if the read operation is seeking to read an updated data value that has already been stored in the volatile memory, and if so remapping that read address; and
(iii) completing the read operation whereby if the read address is remapped at said step (ii) the updated data value is read from the volatile memory;
when the sequence of update operations of the transaction have been performed, causing the updated data values in the volatile memory to be stored in the non-volatile memory at the associated target addresses.

14. A computer program comprising code means operable to cause a data processing apparatus to perform the method of claim 13 when said computer program is run on said data processing apparatus.

## Patentansprüche

1. Datenverarbeitungsvorrichtung, welche aufweist:
einen nicht-flüchtigen Speicher (140), der eine Mehrzahl von Adressen hat, unter welchen Datenwerte innerhalb des nicht-flüchtigen Speichers gespeichert werden können,
einen Prozessor (100), der so betrieben werden kann, daß er eine Transaktion, welche eine Folge von Aktualisierungsvorgängen (Update-Vorgänge) enthält, verarbeiten kann,
wobei jeder Aktualisierungsvorgang eine Zieladresse in dem nicht-flüchtigen Speicher sowie einen entsprechenden aktualisierten Datenwert angibt, der unter dieser Adresse gespeichert werden soll, wobei der Prozessor entweder die Transaktion vollständig ausführen muß oder andernfalls die gesamte Transaktion unbeachtet lassen muß,
einen flüchtigen Speicher (150), der eine Anzahl von Plätzen hat, die so betrieben werden können, daß sie zeitweise einen oder mehrere aktualisierte Datenwerte speichern können,
eine Zuordnungslogik (110, welche ein Register (230, 240) hat, das zu jedem Platz gehört, wobei das Register durch den Prozessor programmierbar ist, um einen Adreßbereich in dem nicht-flüchtigen Speicher zu identifizieren, der auf den zugehörigen Platz abgebildet werden soll, wobei jedes Register der Zuordnungslogik weiterhin durch den Prozessor programmierbar ist, um Größendaten (620) als Steuerdaten zu identifizieren, welche die Größe des an dem zugehörigen Platz zu speichernden Datenwerts angeben,
wobei der Prozessor in der Weise betreibbar ist, daß er beim Durchführen jedes Aktualisierungsvorgangs sicherstellt, daß eines der Register einen Adreßbereich angibt bzw. kennzeichnet, welcher die Zieladresse für diesen Aktualisierungsvorgang umfaßt, und daß er die Zieladresse an die Zuordnungslogik ausgibt,
die Zuordnungslogik in der Weise betreibbar ist, daß sie bei Empfang der Zieladresse das Register bestimmt, welches einen Adreßbereich identifiziert bzw. kennzeichnet, welcher die Zieladresse beinhaltet, und in Abhängigkeit davon eine neu zugeordnete Zieladresse erzeugt, so daß der entsprechende aktualisierte Datenwert an dem zugehörigen Platz in dem flüchtigen Speicher, anstatt in dem nicht-flüchtigen Speicher gespeichert wird,
wobei der Prozessor weiterhin so betreibbar ist, daß er über die Zuordnungslogik eine Leseadresse für einen Lesevorgang, der in der Transaktion enthalten ist, so leitet, daß, falls der Lesevorgang einen aktualisierten Datenwert lesen möchte, der bereits in dem flüchtigen Speicher gespeichert worden ist, diese Leseadresse neu zugeordnet wird, um zu bewirken, daß der aktualisierte Wert aus dem flüchtigen Speicher gelesen wird,
wobei dann, wenn die Folge von Aktualisierungsvorgängen der Transaktion ausgeführt worden ist, der Prozessor so betreibbar ist, daß er bewirkt, daß die aktualisierten Datenwerte in dem flüchtigen Speicher unter den zugehörigen Zieladressen in den nicht-flüchtigen Speicher gespeichert werden.

2. Datenverarbeitungsvorrichtung nach Anspruch 1, wobei vor dem Veranlassen, daß aktualisierte Daten in dem flüchtigen Speicher unter den zugehörigen Zieladressen in den nicht-flüchtigen Speicher gespeichert werden, der Prozessor in der Weise betreibbar ist, daß er bewirkt, daß die ursprünglichen Datenwerte, die in dem nicht-flüchtigen Speicher an den zugehörigen Zieladressen gespeichert wurden, in einen Transaktionspuffer kopiert werden, so daß diese ursprünglichen Werte wiederhergestellt werden können, wenn das nachfolgende Speichern der aktualisierten Datenwerte aus dem flüchtigen Speicher in den nicht-flüchtigen Speicher nicht vollständig erfolgt.

3. Datenverarbeitungsvorrichtung nach einem der vorstehenden Ansprüche, wobei jedes Register der Zuordnungslogik weiterhin so durch den Prozessor programmierbar ist, daß es als Kontrolldaten Typdaten (630, 640) kennzeichnet, die einen oder mehrere Typen von Operationen identifizieren, wobei die Zuordnungslogik so betreibbar ist, daß sie dann, wenn eine empfangene Adresse in den Adreßbereich in einem der Register aufgenommen ist, nur eine neu zugeordnete Adresse erzeugt, wenn die betreffende Operation durch die Typdaten identifiziert ist.

4. Datenverarbeitungsvorrichtung nach einem der vorstehenden Ansprüche, wobei jedes Register der Zuordnungslogik als Steuerdaten ein Freigabeflag (610) enthält, welches durch den Prozessor gesetzt wird, wenn ein Adreßbereich in dem Register programmiert ist, wobei der Prozessor, wenn er einen Adreßbereich in einem der Register programmieren möchte, in der Weise betreibbar ist, daß er ein Register aus irgendeinem der Register auswählt, deren Freigabeflag nicht gesetzt ist.

5. Datenverarbeitungsvorrichtung nach einem der vorstehenden Ansprüche, wobei jedes Register der Zuordnungslogik ein Adreßregister (230) zum Speichern von Daten, aus welchem der Adreßbereich ableitbar ist, und ein Steuerregister zum Speichern der Daten aufweist.

6. Datenverarbeitungsvorrichtung nach einem der vorstehenden Ansprüche, wobei die Plätze in dem flüchtigen Speicher Typplätze aufweisen, wobei jeder Typplatz in der Weise betreibbar ist, daß er einen Datenwert speichert.

7. Datenverarbeitungsvorrichtung nach Anspruch 6, wobei der auf einen der Typplätze abzubildende Adreßbereich in dem zugehörigen Register der Zuordnungslogik durch einen Adreßwert und die Größendaten identifiziert bzw. **gekennzeichnet** wird.

8. Datenverarbeitungsvorrichtung nach einem der vorstehenden Ansprüche, wobei die Plätze in dem flüchtigen Speicher einen oder mehrere Seitenplätze aufweisen, wobei jeder Seitenplatz in der Weise betreibbar ist, daß er eine Mehrzahl von Datenwerten speichert, die auf einen Bereich des nicht-flüchtigen Speichers abgebildet werden sollen.

9. Datenverarbeitungsvorrichtung nach Anspruch 8, wobei der Bereich des nicht-flüchtigen Speichers aus einer oder mehreren Seiten des nicht-flüchtigen Speichers besteht.

10. Datenverarbeitungsvorrichtung nach Anspruch 9, wobei die Größe der Seiten des nicht-flüchtigen Speichers vorab bestimmt wird und wobei der Adreßbereich, der auf einen der Seitenplätze abgebildet werden soll, unter Bezug auf eine Startadresse (220) für den Bereich des nicht-flüchtigen Speichers, wie er in dem zugehörigen Register gespeichert ist, und die Anzahl von Seiten des nicht-flüchtigen Speichers innerhalb dieses Bereichs festgelegt wird.

11. Datenverarbeitungsvorrichtung nach einem der Ansprüche 8 bis 10, wobei jedes Register der Zuordnungslogik als Steuerdaten ein Freigabeflag (610) umfaßt, welches durch den Prozessor gesetzt wird, wenn ein Adreßbereich in dem Register programmiert ist, und wobei die Plätze (slots) in dem flüchtigen Speicher weiterhin Typplätze aufweisen, wobei jeder Typplatz so betreibbar ist, daß einen Datenwert speichert, wobei dann, wenn der Prozessor einen Adreßbereich in einem der Register programmieren möchte, er in der Weise betreibbar ist, daß er, falls verfügbar, ein Register auswählt, welches einem Typplatz zugeordnet ist, dessen Freigabeflag nicht gesetzt ist, und, falls alle Register, die zu einem Typplatz gehören, ihr Freigabeflag gesetzt haben, falls verfügbar, ein Register auswählt, welches zu einem Seitenplatz gehört, dessen Freigabeflag nicht gesetzt ist.

12. Datenverarbeitungsvorrichtung nach Anspruch 11, wobei dann, wenn alle Register ihr Freigabeflag gesetzt haben, der Prozessor so betreibbar ist, daß er veranlaßt, daß die ursprünglichen Datenwerte an den Zieladressen der aktualisierten Datenwerte in den zugehörigen Plätzen in einen Puffer in den nicht-flüchtigen Speicher kopiert werden, woraufhin die aktualisierten Datenwerte in den zugehörigen Plätzen in ihre Zieladressen in dem nicht-flüchtigen Speicher geschrieben und dann das Freigabeflag für jedes zugehörige Register erneut gesetzt wird.

13. Verfahren zum Verarbeiten einer Transaktion in einer Datenverarbeitungsvorrichtung, wobei die Transaktion eine Folge bzw. Sequenz von Aktualisierungsvorgängen (Update-Vorgängen) enthält, und die Datenverarbeitungsvorrichtung einen nicht-flüchtigen Speicher (140) enthält, der eine Mehrzahl von Adressen hat, unter welchen Datenwerte innerhalb des nicht-flüchtigen Speichers gespeichert werden können, und einen Prozessor (100) aufweist, der in der Weise betreibbar ist, daß er die Transaktion verarbeitet, wobei jeder Aktualisierungsvorgang eine Zieladresse in dem nicht-flüchtigen Speicher und einen entsprechenden aktualisierten Datenwert, der unter dieser Adresse gespeichert werden soll, angibt, wobei der Prozessor die Transaktion entweder vollständig abschließen muß oder ansonsten die gesamte Transaktion verwerfen muß, wobei die Datenverarbeitungsvorrichtung weiterhin einen flüchtigen Speicher (150) aufweist, der eine Anzahl von Plätzen hat, welche in der Weise betreibbar sind, daß sie zeitweise einen oder mehrere aktualisierte Datenwerte speichern, und eine Zuordnungslogik (110) aufweist, die ein Register (230, 240) hat, welches jedem Platz zugeordnet ist, und so betreibbar ist, daß sie einen Adreßbereich in dem nicht-flüchtigen Speicher identifiziert bzw. kennzeichnet, der dem zugehörigen Platz zugeordnet werden soll, wobei jedes Register der Zuordnungslogik weiterhin durch den Prozessor programmierbar ist, als Steuerdaten Größendaten (620) identifiziert, welche die Größe eines in dem zugehörigen Platz zu speichernden Datenwertes angebeben, wobei das Verfahren die Schritte aufweist:
wenn jeder Aktualisierungsvorgang durchgeführt wird:
(a) Bestimmen, ob eines der Register einen Adreßbereich angibt, der die Zieladresse für diesen Aktualisierungsvorgang umfaßt, und, falls nicht, Programmieren eines der Register, so daß es einen solchen Adreßbereich umfaßt,
(b) Ausgeben der Zieladresse an die Zuordnungslogik,
(c) beim Empfang der Zieladresse durch die Zuordnungslogik Bestimmen des Registers, welches einen Adreßbereich angibt, der die Zieladresse beinhaltet und Erzeugen einer neu zugeordneten Zieladresse in Abhängigkeit davon,
(d) Speichern des entsprechenden aktualisierten Datenwertes an dem zugehörigen Platz des flüchtigen Speichers, der durch die neu zugeordnete Zieladresse angegeben wurde,
wenn ein Lesevorgang, der in der Transaktion enthalten ist, ausgeführt werden soll:
(i) Leiten einer Leseadresse für den Lesevorgang über die Zuordnungslogik,
(ii) Bestimmen, ob der Lesevorgang versucht, einen aktualisierten Datenwert zu lesen, der bereits in dem flüchtigen Speicher gespeichert worden ist, und, wenn dies der Fall ist, neu Zuordnen dieser Leseadresse, und
(iii) Abschließen des Lesevorgangs, wobei dann, wenn die Leseadresse in Schritt (ii) neu zugeordnet wird, der aktualisierte Datenwert aus dem flüchtigen Speicher gelesen wird,
wenn die Sequenz von Aktualisierungsvorgängen der Transaktion durchgeführt worden ist, Veranlassen, daß die aktualisierten Datenwerte in dem flüchtigen Speicher unter den zugehörigen Zieladressen in dem nicht-flüchtigen Speicher gespeichert werden.

14. Computerprogramm, welches einen Code aufweist, der in der Weise betreibbar ist, daß er eine Datenverarbeitungsvorrichtung veranlaßt, das Verfahren nach Anspruch 13 auszuführen, wenn man das Computerprogramm auf der Datenverarbeitungsvorrichtung laufen läßt.

## Revendications

1. Appareil de traitement de données comprenant :
une mémoire non volatile (140) ayant une pluralité d'adresses auxquelles des valeurs de données peuvent être stockées dans la mémoire non volatile ;
un processeur (100) ayant pour fonction de traiter une transaction contenant une séquence d'opérations de mise à jour, chaque opération de mise à jour identifiant une adresse cible dans ladite mémoire non volatile et une valeur de donnée mise à jour correspondante devant être stockée à cette adresse, le processeur devant soit effectuer la transaction en entier soit abandonner la totalité de la transaction ;
une mémoire volatile (150) comportant un certain nombre d'emplacements ayant pour fonction de stocker momentanément une ou plusieurs valeurs de données mises à jour ;
une logique de mise en correspondance (110) ayant un registre (230, 240) associé à chaque emplacement, chaque registre étant programmable par le processeur pour identifier une plage d'adresses dans la mémoire non volatile devant être mise en correspondance avec l'emplacement associé, chaque registre de la logique de mise en correspondance étant en outre programmable par le processeur pour identifier en tant que données de commande des données de taille (620) identifiant la taille de la valeur de donnée devant être stockée à l'emplacement associé ;
le processeur ayant pour fonction, lorsqu'il exécute chaque opération de mise à jour, de faire en sorte que l'un desdits registres identifie une plage d'adresses comportant l'adresse cible pour cette opération de mise à jour, et de fournir en sortie l'adresse cible à la logique de mise en correspondance ;
la logique de mise en correspondance ayant pour fonction, lors de la réception de l'adresse cible, de déterminer le registre identifiant une plage d'adresses qui comporte l'adresse cible et en fonction de celle-ci, de générer une adresse cible reconfigurée, afin que la valeur de donnée mise à jour correspondante soit stockée à l'emplacement associé de la mémoire volatile plutôt que dans la mémoire non volatile ;
le processeur ayant en outre pour fonction d'acheminer via la logique de mise en correspondance une adresse de lecture pour une opération de lecture contenue dans la transaction afin que si l'opération de lecture cherche à lire une valeur de donnée mise à jour qui a déjà été stockée dans la mémoire volatile, cette adresse de lecture soit reconfigurée pour faire en sorte que la valeur de donnée mise à jour soit lue depuis la mémoire volatile ;
lorsque la séquence d'opérations de mise à jour de la transaction a été effectuée, le processeur ayant pour fonction de faire en sorte que les valeurs de données mises à jour dans la mémoire volatile soient stockées dans la mémoire non volatile aux adresses cibles associées.

2. Appareil de traitement de données selon la revendication 1, dans lequel, avant de faire en sorte que les valeurs de données mises à jour dans la mémoire volatile soient stockées dans la mémoire non volatile aux adresses cibles associées, le processeur a pour fonction de faire en sorte que les valeurs de données originales stockées dans la mémoire non volatile aux adresses cibles associées soient copiées dans un tampon de transaction afin que ces valeurs originales puissent être récupérées si le stockage ultérieur des valeurs de données mises à jour depuis la mémoire volatile vers la mémoire non volatile ne se termine pas.

3. Appareil de traitement de données selon l'une quelconque des revendications précédentes, dans lequel chaque registre de la logique de mise en correspondance est en outre programmable par le processeur pour identifier en tant que données de commande des données de type (630, 640) identifiant un ou plusieurs types d'opérations, la logique de mise en correspondance ayant pour fonction, si une adresse reçue est contenue dans la plage d'adresses dans l'un desdits registres, de ne produire qu'une adresse reconfigurée si l'opération correspondante est identifiée par lesdites données de type.

4. Appareil de traitement de données selon l'une quelconque des revendications précédentes, dans lequel chaque registre de la logique de mise en correspondance comprend en tant que données de commande un indicateur de validation (610) qui est positionné par le processeur lorsqu'une plage d'adresses est programmée dans le registre, et lorsque le processeur souhaite programmer une plage d'adresses dans l'un desdits registres, le processeur ayant pour fonction de sélectionner un registre parmi tous les registres dont l'indicateur de validation n'est pas positionné.

5. Appareil de traitement de données selon l'une quelconque des revendications précédentes, dans lequel chaque registre de la logique de mise en correspondance comprend un registre d'adresse (230) pour stocker des données dont la plage d'adresses peut être déduite et un registre de commande pour stocker les données de commande.

6. Appareil de traitement de données selon l'une quelconque des revendications précédentes, dans lequel les emplacements, dans ladite mémoire volatile, comprennent des emplacements de type, chaque emplacement de type ayant pour fonction de stocker une valeur de donnée.

7. Appareil de traitement de données selon la revendication 6, dans lequel la plage d'adresses devant être mise en correspondance avec l'un desdits emplacements de type est identifiée dans le registre associé de la logique de mise en correspondance par une valeur d'adresse et par les données de taille.

8. Appareil de traitement de données selon l'une quelconque des revendications précédentes, dans lequel les emplacements, dans ladite mémoire volatile, comprennent un ou plusieurs emplacements de pages, chaque emplacement de page ayant pour fonction de stocker une pluralité de valeurs de données mises en correspondance avec une plage de la mémoire non volatile.

9. Appareil de traitement de données selon la revendication 8, dans lequel la plage de la mémoire non volatile est constituée d'une ou plusieurs pages de la mémoire non volatile.

10. Appareil de traitement de données selon la revendication 9, dans lequel la taille des pages dans la mémoire non volatile est prédéterminée, et la plage d'adresses devant être mise en correspondance avec l'un desdits emplacements de pages est déterminée en référence à l'adresse de départ (220) de la plage de la mémoire non volatile telle qu'elle est stockée dans le registre associé et au nombre de pages de la mémoire non volatile dans la plage.

11. Appareil de traitement de données selon l'une quelconque des revendications 8 à 10, dans lequel chaque registre de la logique de mise en correspondance comporte en tant que données de commande un indicateur de validation (610) qui est positionné par le processeur lorsqu'une plage d'adresses est programmée dans le registre, et dans lequel les emplacements, dans ladite mémoire volatile, comprennent en outre des emplacements de type, chaque emplacement de type ayant pour fonction de stocker une valeur de donnée, dans lequel, lorsque le processeur souhaite programmer une plage d'adresses dans l'un desdits registres, le processeur a pour fonction de sélectionner, s'il est disponible, un registre associé à un emplacement de type dont l'indicateur de validation n'est pas positionné, et si tous les registres associés à un emplacement de type ont leur indicateur de validation positionné, de sélectionner, s'il est disponible, un registre associé à un emplacement de page dont l'indicateur de validation n'est pas positionné.

12. Appareil de traitement de données selon la revendication 11, dans lequel, si tous les registres ont leur indicateur de validation positionné, le processeur a pour fonction de faire en sorte que les valeurs de données originales aux adresses cibles des valeurs de données mises à jour aux emplacements associés soient copiées dans un tampon de la mémoire non volatile, les valeurs de données mises à jour dans les emplacements associés étant ensuite écrites à leurs adresses cibles dans la mémoire non volatile et l'indicateur de validation correspondant à chaque registre associé étant réinitialisé.

13. Procédé de traitement dans un appareil de traitement de données d'une transaction contenant une séquence d'opérations de mise à jour, l'appareil de traitement comprenant une mémoire non volatile (140) ayant une pluralité d'adresses auxquelles des valeurs de données peuvent être stockées dans la mémoire non volatile, et un processeur (100) ayant pour fonction de traiter la transaction, chaque opération de mise à jour identifiant une adresse cible dans ladite mémoire non volatile et une valeur de donnée mise à jour correspondante devant être stockée à cette adresse, le processeur devant soit achever la transaction en entier soit abandonner la totalité de la transaction, l'appareil de traitement de données comprenant en outre une mémoire volatile (150) comportant un certain nombre d'emplacements ayant pour fonction de stocker momentanément une ou plusieurs valeurs de données mises à jour, et une logique de mise en correspondance (110) ayant un registre (230, 240) associé à chaque emplacement, qui est programmable pour identifier une plage d'adresses dans la mémoire non volatile devant être mise en correspondance avec l'emplacement associé, chaque registre de la logique de mise en correspondance étant en outre programmable par le processeur pour identifier en tant que données de commande des données de taille (620) identifiant la taille de la valeur de donnée devant être stockée à l'emplacement associé, le procédé comprenant les étapes consistant à :
lors de l'exécution de chaque opération de mise à jour :
(a) déterminer si l'un desdits registres identifie une plage d'adresses comportant l'adresse cible pour cette opération de mise à jour et, si cela n'est pas le cas, programmer l'un desdits registres afin qu'il contienne cette plage d'adresses ;
(b) fournir en sortie l'adresse cible à la logique de mise en correspondance ;
(c) lors de la réception de l'adresse cible par la logique de mise en correspondance, déterminer le registre identifiant une plage d'adresses qui contient l'adresse cible, et en fonction de cela, générer une adresse cible reconfigurée ;
(d) stocker la valeur de donnée mise à jour correspondante à l'emplacement associé de la mémoire volatile identifié par l'adresse cible reconfigurée ;
lors de l'exécution d'une opération de lecture contenue dans la transaction :
(i) acheminer par l'intermédiaire de la logique de mise en correspondance une adresse de lecture destinée à l'opération de lecture ;
(ii) déterminer si l'opération de lecture cherche à lire une valeur de donnée mise à jour ayant déjà été stockée dans la mémoire volatile et, si cela est le cas, reconfigurer cette adresse de lecture ; et
(iii) terminer l'opération de lecture, d'où il résulte que si l'adresse de lecture est reconfigurée lors de ladite étape (ii), la valeur de donnée mise à jour est lue depuis la mémoire volatile ;
lorsque la séquence d'opérations de mise à jour de la transaction a été effectuée, faire en sorte que les valeurs de données mises à jour dans la mémoire volatile soient stockées dans la mémoire non volatile aux adresses cibles associées.

14. Programme informatique comprenant un moyen de codage ayant pour fonction de faire en sorte qu'un appareil de traitement de données exécute le procédé de la revendication 13 lorsque ledit programme informatique est exécuté sur ledit appareil de traitement de données.
